Europäisches Patentamt

European Patent Office

Office européen des brevets

(19)

(11) Publication number: **0 193 393**
A2

# (12) EUROPEAN PATENT APPLICATION

(21) Application number: 86301370.2

(22) Date of filing: 26.02.86

(51) Int. Cl.⁴: **G 01 K 3/04**

(30) Priority: 26.02.85 US 705540

(43) Date of publication of application:
03.09.86 Bulletin 86/36

(84) Designated Contracting States:
CH DE FR GB IT LI NL SE

(71) Applicant: MINNESOTA MINING AND
MANUFACTURING COMPANY
3M Center, P.O. Box 33427
St. Paul, Minnesota 55133-3427(US)

(72) Inventor: Emmerling, James R, c/o Minnesota Mining
and Manufacturing Company 2501 Hudson Road
St. Paul Minnesota 55133-3427(US)

(74) Representative: Baillie, Iain Cameron et al,
c/o Ladas & Parry Isartorplatz 5
D-8000 München 2(DE)

(54) Critical temperature or time interval indicator.

(57) An intermediate indicator assembly (10, 30) is provided which is adapted to define a time interval or critical temperature indicator (12, 48) when folded along a fold line (20, 34). The intermediate indicator assembly (10, 30) reduces the overall cost of the indicator (12, 48) by eliminating barrier strips or separating frames which were previously necessary to maintain an indicating wick (26, 42) separate from an indicating liquid (28, 38) which may be sorbed into the wick (26, 42) to provide a visual indication that a predetermined time interval has expired or that the device has been exposed to a predetermined temperature. According to the invention, the liquid (28, 38) and the wick (26, 42) are disposed on opposite sides of the fold line (20, 34) along which the intermediate indicator assembly (10, 30) may be subsequently folded to activate the indicator (12, 48) and place it into operation.

FIG. 2

## Description
## Critical Temperature or Time Interval Indicator

### Technical Field

The present invention relates to non-reversible critical temperature or time interval indicating devices which provide a visual indication that a critical temperature has been reached or a predetermined time interval has expired.

### Background Art

A time interval or critical temperature indicator was disclosed in U.S. Patent No. 3,954,011 to Manske, in which a pad saturated with a liquid is separated from a wick by a barrier or the pad and wick maintained in spaced relationship by a surrounding frame. To utilize the device as a time interval indicator, the wick is brought into contact with the pad to activate the device, either by removing the barrier or physically forcing the pad and wick together, and sorption and migration of the liquid from the pad and along the wick indicates the passage of time. The fluid may contain a visible dye to provide a visual indication of fluid migration or, alternatively, the fluid may contain a chemical which is reactive with a second chemical contained in or on the wick to form a visibly colored material. The time necessary for the fluid to migrate along the wick may be controlled by the fluid concentration in the pad and the wick may assume a tortuous path to increase the time interval necessary for the fluid to migrate to a specific point of the wick.

The device of U.S. Patent No. 3,954,011 may be employed as a critical temperature indicator by providing the pad with a fluid which solidifies at a desired predetermined critical temperature. The device is cooled so as to solidify the fluid and the device activated, as indicated above, by bringing the pad and wick into contact. Since the fluid has been solidified, no migration of the fluid along the wick will be possible, and no visible indication will be provided. If the temperature of the device is raised so as to melt the fluid, migration will then occur and a visual indication that the device has reached the critical temperature will be provided. The device may be advantageously attached to a container for blood, pharmaceuticals, beverages and other items which must be maintained below a critical temperature for preservation. When used as a critical temperature indicator the device will indicate that the item has been exposed to an elevated temperature and should not be used.

The time interval or critical temperature indicator described above operates satisfactorily, but cannot be used in a wide variety of applications because its cost relative to the item to be protected is too high to make its use economically feasible. This cost is relatively high predominantly because means must be provided to separate the pad and wick prior to activation of the indicator.

## Disclosure of Invention

The present invention provides a time interval or critical temperature indicator which is produced at a reduced cost relative to the device of U.S. Patent No. 3,954,011 by eliminating the barrier or frame utilized to separate the fluid-saturated pad and the wick prior to activation. Generally speaking, the present invention is an intermediate assembly which includes a substrate in open-book form which has a fold line at its midpoint. A pad containing a liquid is disposed on one side of the fold line and a sorbent wick is disposed on the other side of the fold line, out of contact with the pad. This intermediate assembly may be shipped and stored for an indefinite period of time without the liquid being sorbed into the wick. For use, the intermediate indicator assembly is simply folded at the fold line to bring the pad and wick into contact. This folding operation may be accomplished by a simple machine located where the item to be monitored is manufactured or stored, and the activated indicator may then be immediately be attached to the item.

In particular, the present invention is an intermediate time interval or critical temperature indicator assembly adapted to define, when folded along a fold line, a time interval or critical temperature indicator including, in ordered superposed layers, an attachment layer, a supply of fluid, a fluid sorbent wick and a transparent cover to permit visual observation of sorption of the fluid by the wick. The intermediate indicator assembly includes a thin, planar and non-sorbent attachment layer extending at least predominantly to one side of the fold line; a supply of fluid disposed on and attached to one major surface of the attachment layer, with the supply being further disposed completely on the one side of the fold line; a thin, planar and sorbent wick connected to the attachment layer and disposed at least predominantly on the other side of the fold line and completely free of contact with the supply of fluid; a thin, planar, transparent and non-sorbent cover connected to the attachment layer and disposed at least predominantly on the other side of the fold line and completely free of contact with the supply of fluid, with the cover being disposed relative to the wick so that, when the intermediate indicator assembly is folded at said fold line, the wick will be interposed between the cover and the supply of fluid; and an adhesive for attaching the cover to the one major surface of the attachment layer when the intermediate indicator assembly is folded at the fold line so that the wick will be brought into and maintained in pressure contact with the supply of fluid.

Preferably the wick is attached directly to the one major surface of the attachment layer and disposed completely on the other side of the fold line and the cover is attached directly to the other major surface of the attachment layer and disposed completely on the other side of the fold line. Also preferably, the intermediate indicator assembly includes a sorbent pad disposed on and attached to the one major surface of the attachment layer for containing the fluid and the attachment layer includes a pressure-sensitive adhesive coating both major surfaces of the attachment layer to afford attachment of the attachment layer to a surface and attachment of the wick, the cover and the pad to the attachment layer. The intermediate indicator assembly may also include protective release liners covering the adhesive layers of the attachment layer so that a series of intermediate indicator assemblies may be wound in a coil for storage and shipment.

Brief Description of the Drawings

The present invention will be more thorougly described with reference to the accompanying drawings wherein like numbers refer to like parts in the several views, and wherein:

FIGURE 1 is a plan view of two intermediate indicator assemblies of the present invention sequentially arranged on a release liner;

FIGURE 2 is a cross-sectional view of the release liner and one of the intermediate indicator assemblies of FIGURE 1, taken generally along the line 2-2 of FIGURE 1;

FIGURE 3 is a cross-sectional view of an intermediate indicator assembly in its operative position;

FIGURE 4 is a cross-sectional view of a second embodiment of an intermediate indicator assembly taken from a perspective similar to the line 2-2 of FIGURE 1;

FIGURE 5 is a cross-sectional view of the intermediate indicator assembly of FIGURE 4 in its operative position; and

FIGURE 6 is a perspective view of an applicator apparatus used to fold and present the intermediate indicator assemblies of the present invention for use.

Detailed Description

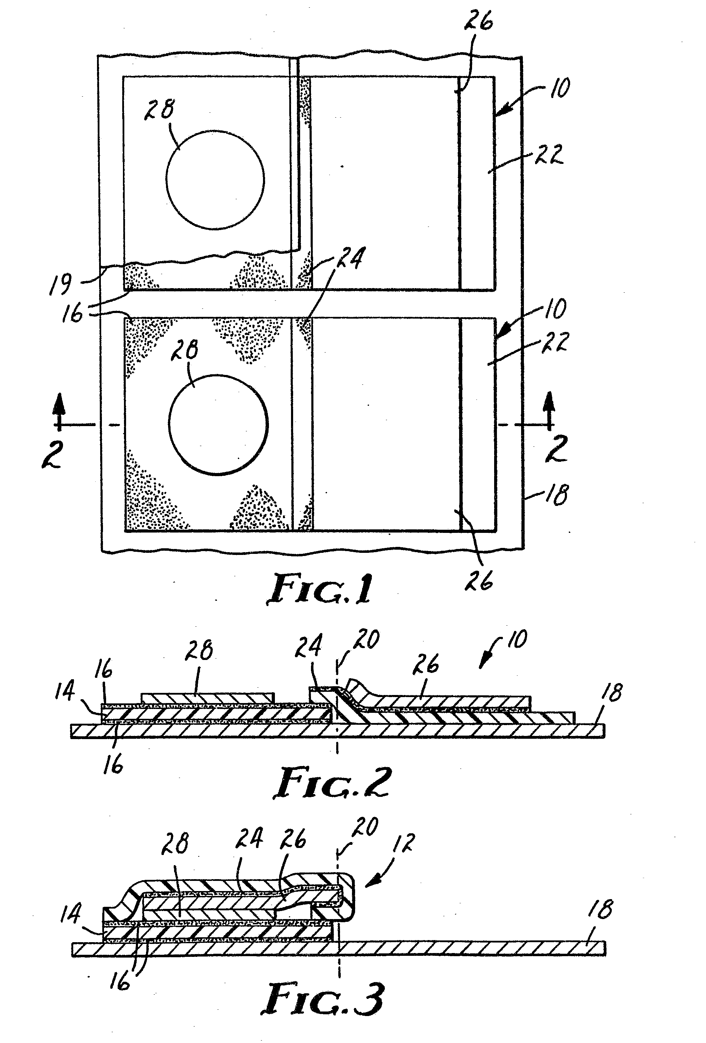

FIGURES 1 and 2 illustrate an intermediate time interval or critical temperature indicator assembly, generally indicated as 10, which, when finally assembled by folding, produces a time interval or critical temperature

0193393

indicator which is generally indicated as 12 in FIGURE 3. The intermediate assembly 10 illustrated by FIGURES 1 and 2 is the configuration in which the present invention is manufactured, sold, shipped and stored prior to use. The indicator 12 shown in FIGURE 3 is the configuration in which the present invention is attached to an item to perform its function.

The intermediate assembly 10 includes a thin, planar and non-sorbent attachment layer 14 which is coated on both major surfaces with a pressure-sensitive adhesive 16. The attachment layer 14 is connected by the adhesive 16 to a protective release liner 18 which supports and carries a series of intermediate assemblies 10. The release liner 18 includes a release agent, such as silicone, which prevents the adhesive 16 found sticking too aggressively to the release liner 18 and permits the easy removal of the intermediate assembly 10 from the release liner 18. The intermediate assemblies 10 may be provided with a second release liner 19 to protect the remaining side of the intermediate assembly 10. This second liner 19 may be necessary if a strip of indicator assemblies is to be wound in a coil to facilitate shipment and storage. The second liner 19 may only cover the attachment layer 14, as illustrated, or may extend completely across the indicator assembly 10.

The attachment layer 14 is disposed completely to one side of a fold line 20 at which the intermediate assembly 10 may be folded to produce the indicator 12. Attached to the attachment layer 14 by means of the adhesive 16 is a thin, planar, non-sorbent and transparent cover 22 which is disposed predominantly on the other side of the fold line 20, i.e. the side of the fold line 20 opposite the attachment layer 14.

The transparent cover 22 includes a layer of pressure-sensitive adhesive 24 which is used to attach a thin, planar, sorbent wick 26 to the cover 22. The wick 26 is disposed predominantly or completely, as illustrated, on

-6-

the side of the fold line 20 opposite the attachment layer 14. Finally, there is disposed on and attached to the attachment layer 14 a fluid (not shown) which may be absorbed by the wick 26. The fluid may be deposited directly on the pressure-sensitive adhesive 16 coating the attachment layer 14, but preferably is contained within a thin, planar and sorbent pad 28 which is attached to the attachment layer 14 by the adhesive 16 and disposed completely out of contact with the wick 26.

When the intermediate indicator assembly 10 is folded as shown in FIGURE 3 to produce the indicator 12, the wick 26 is brought into contact with the pad 28 and maintained in such contact by the transparent cover 22 which attaches to the pressure-sensitive adhesive 16 located on the attachment layer 14.

If the indicator 12 is to be used as a time interval indicator, migration of the fluid from the pad 28 to the wick 26 will begin immediately and the progress of fluid migration into the wick 26 will indicate a time interval. The elapsed time necessary for the fluid to migrate completely through the wick 26 may be controlled by proper selection of the material of the wick 26, the properties of the fluid, the amount of fluid and the concentration of the fluid within the pad 28, if such a pad 28 is used. A visual indication of migration of the fluid into the wick 26 may be provided by a visible dye dissolved in or carried by the fluid or, alternatively, the visible indication may be provided by the chemical contained in or deposited on the wick 26 which is reactive with the migrating fluid or component thereof to form a visibly colored material. Such dyes and reactive chemicals are more particularly described in U.S. Patent No. 3,954,011.

The indicator 12 may also be used to indicate the exposure of the indicator 12 to a particular critical temperature. This mode of operation may be more commercially useful than its use as an elapsed time indicator and is achieved by providing the intermediate assembly with a fluid which at the critical temperature. To use the indicator 12 in this mode, the intermediate assembly 10, as illustrated in FIGURE 2, is cooled below the critical temperature to solidify the fluid and the intermediate assembly 10 subsequently folded to the configuration of FIGURE 3 to bring the wick 26 into contact with the pad 28. Because the fluid is solidified, sorption by the wick 26 is not possible and no fluid migration into the wick 26 will occur. If, however, the temperature of the indicator 12 is elevated, the fluid will melt and migrate into the wick 26 and thus provide an indication that the indicator has been exposed to a temperature above the desired critical temperature. This mode of operation of the indicator 12 is particularly useful if the indicator 12 is attached by means of its pressure-sensitive adhesive 16 to an item containing substances such as blood, pharmaceuticals or beverages which may lose their effectiveness or become dangerous if exposed to elevated temperatures.

If the fluid utilized is water, the critical temperature will be 0 degrees C, but indications at other temperatures above or below the freezing point of water may be obtained by substituting chemicals which have freezing temperatures above or below the freezing temperature of water. Such chemicals are readily available and are described with particularity in U.S. Patent No. 3,954,011. These chemicals are preferably provided with a visible dye or a reactive chemical to provide a visual indication as described above.

Although the indicator 12 is referred to as a "critical temperature indicator" to differentiate this function from its use as a time interval indicator, the indicator 12 is actually a "time and temperature indicator" since the function of indicating a time interval may be retained when the indicator 12 is used to indicate exposure to a critical temperature. By combining the time and critical temperature functions, one may determine if the monitored item has been exposed to a critical temperature, and if the exposure has been for a sufficiently long time interval to cause damage.

The advantage of the intermediate assembly 10, as shown in FIGURE 2, over the indicator shown in U.S. Patent No. 3,954,011 is that no removable barrier or frame need be provided to maintain the pad and wick separate from each other prior to placing the intermediate assembly 10 in operation. A series of intermediate assemblies 10 are provided on a long length of the release liner 18 and may be shipped and stored without danger of fluid migration from the pad 28 to the wick 26. To place the intermediate assemblies 10 in operation, it is merely necessary for the user to fold the intermediate assembly 10 at the fold line 20 and attach the resultant indicator 12 to the item to be monitored by means of the pressure-sensitive adhesive 16. Because no separating barrier or frame need be included, the cost of the intermediate assemblies 10 is greatly reduced relative to the cost of the device disclosed in U.S. Patent No. 3,954,011.

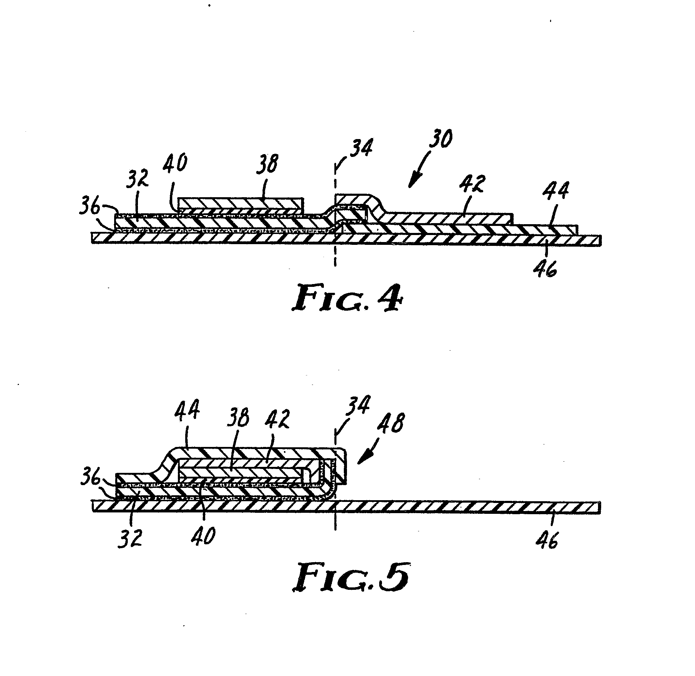

It will be apparent to those skilled in the art that many modifications may be made to the intermediate assembly 10 of FIGURE 2 and still achieve the desired result. For example, the cover 22 may be attached to the side of the attachment layer 14 opposite the pad 28 rather than the same side as illustrated in FIGURE 2. Furthermore, the wick 26 could be attached directly to the attachment layer 14 on the side opposite the pad 28 and the cover 22 attached to the wick 26. Another embodiment of an intermediate assembly is illustrated by FIGURES 4 and 5, and this assembly may actually be preferred over the intermediate assembly 10 illustrated in FIGURE 2 because the amount of pressure-sensitive adhesive necessary is reduced.

FIGURE 4 illustrates an intermediate assembly 30 which includes an attachment layer 32 located predominantly on one side of fold line 34. The attachment layer 32 is preferably a tape double coated with pressure-sensitive adhesive 36 and is preferably a polyester film which is approximately 25 mm square and 0.03 mm thick. The preferred intermediate assembly 30 is provided with a sorbent pad 38 which may be any porous matrix material which can absorb or entrap a fluid and may be made from woven or non-woven natural or synthetic fibers. Cellulosic materials are particularly preferred. In the preferred embodiment there is also included a polyolefin film layer 40 which is also approximately 0.03 mm thick and which is heat laminated to the pad 38.

Attached to the same major surface of the attachment layer 32 as the pad 38 is a wick 42 which is disposed completely to the side of the fold line 34 opposite the pad 38. The wick 42 is thus maintained completely free of contact with the pad 38 to prevent the premature migration of fluid from the pad 38. The wick 42 may be constructed of generally the same materials as the pad 38 but is preferably 50-pound white paper. The wick 42 is somewhat thinner than the pad 38 and has dimensions of approximately 18 mm square.

Completing the intermediate indicator assembly 30 is a transparent cover 44 of approximately 23 mm square polyester film which is approximately 0.03 mm thick. The cover 44 is attached to the major surface of the attachment layer 32 opposite the pad 38 by means of the pressure-sensitive adhesive 36 and is disposed completely on the side of the fold line 34 which is opposite the pad 38. The cover 44 extends a greater distance from the fold line 34 than does the wick 42 in order that the cover 44 may contact and be secured to the adhesive 36 on the major surface of the attachment layer 32 on which the pad 38 is disposed.

A series of intermediate indicator assemblies 30 are mounted for shipping and storage on a release liner 46 by means of the pressure-sensitive adhesive 36 of the attachment layer 32. The release liner 46 is preferably 0.03 mm thick polyester film and is provided to orient and carry the intermediate assemblies 30 and protect the adhesive 36 from contamination.

The intermediate assembly 30 may further be provided with a second release liner (not shown), similar to the liner 19 of FIGURE 1, overlying the wick 42 and the pad 38 and attached to the adhesive 36 covering the major surface of the attachment layer 32 on which is located the pad 38, if it is found necessary to protect the adhesive 36. The second release liner will preferably be provided if it is desirable to wind the release liner 46 and its series of intermediate assemblies 30 into a coil for convenience of shipping and storage.

It should be apparent from the preferred dimensions noted above that the drawings are not to scale and are greatly exaggerated in the thickness of the various elements for clarity. Distortion is most evident at the fold line, with the fold and assembly being very flat and thin.

In operation, the intermediate indicator assemblies 10 or 30 would be manufactured on long strips of the release liner 18 or 46 and may be shipped in strip form or coiled if a second release liner is added to protect the upper surfaces of the intermediate assemblies 10 or 30. The pads 28 or 38 of the intermediate assemblies 10 or 30 would contain an appropriate fluid and are maintained out of contact with the wicks 26 or 42 by the unfolded configuration of the intermediate assemblies 10 or 30. To employ the intermediate assemblies 10 or 30 as an elapsed time indicator, the ultimate user would simply fold the wick 26 or 42 and cover 22 or 44 over the pad 28 or 38 and secure the cover 22 or 44 to the attachment layer 14 or 32. The folded and complete indicator 12 or 48 (FIGURE 5) would then be attached to the item to be monitored by the pressure-sensitive adhesive 16 or 36. Complete migration of the fluid throughout the entire extent of the wick 26 or 42 would then indicate that a predetermined time period has elapsed.

To operate the intermediate assembly 10 or 30 as a critical temperature indicator, the ultimate user would cool the assembly 10 or 30 to a temperature below the freezing point of the fluid provided in the pad 28 or 38 before folding the assembly 10 or 30 as indicated above. The completed indicator 12 or 48 is then attached to the item to be monitored by the pressure-sensitive adhesive 16 or 36. Exposure of the indicator 12 or 48 to a temperature above the melting point of the fluid would then provide a visual indication that the device 12 or 48 and the item to which it is attached have been exposed to a temperature above the critical temperature determined by the melting point of the fluid.

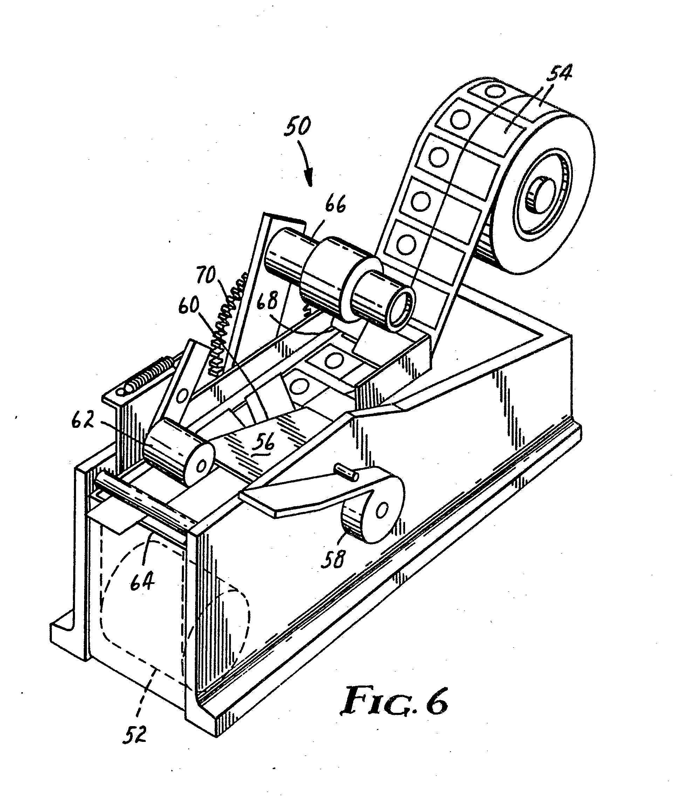

It is apparent that the intermediate assemblies 10 or 30 may be easily manually manipulated and folded by the ultimate user for activation and attachment to an item to be monitored, but this folding process may be automated for speed and convenience by the apparatus illustrated in FIGURE 6.

FIGURE 6 illustrates a dispenser 50 which automatically folds the intermediate indicator assemblies 10 or 30 to produce the indicator 12 or 48. The dispenser 50 also meters out the indicator 12 or 48 singly for attachment to the item to be monitored. The dispenser 50 is suffi- ciently compact so that it may be employed within a cold-storage room close to the item to be monitored if the intermediate assembly 10 or 30 is to be used as a critical temperature indicator.

Major features of the dispenser 50 include a drum 52 to wind the release liner 18 or 46 and thus advance a series of intermediate indicator assemblies 54 through a folding plow 56 located along the path traveled by the intermediate assemblies 54. The intermediate assemblies 54 of FIGURE 6 may correspond to either of the intermediate assemblies 10 or 30 and either may be used with the dispenser 50. The release liner drum 52 is driven by means of a hand-operated lever 58, each stroke of which advances the drum 52 a distance corresponding to the width of one intermediate assembly 54. In traveling through the dispenser 50, the intermediate assemblies 54 are engaged by the narrow end of the folding plow 56 which slips between the cover 22 or 44 and the release liner 18 or 46 of the intermediate assemblies 54. The folding plow 56 has an edge 60 which extends progressively further toward the pad 28 or 38 and thereby forces the cover 22 or 44 and wick 26 or 42 to fold over the pad 28 or 38. After traveling through the folding plow 56, the intermediate assemblies 54 encounter a pressure roller 62 which forces the cover 22 or 44 into engagement with the attachment layer 14 or 32. Beyond the pressure roller 62, the release liner 18 or 46 is drawn around a splitter tongue 64 which has a relatively sharp curvature. The stiffness of the folded intermediate assembly 54 does not allow the assembly 54 to follow the sharp curvature of the splitter tongue 64 and thus causes the folded intermediate assembly 54 to separate from its previously attached release liner 18 or 46.

If the intermediate assemblies 54 are provided with a second release liner, this release liner may be separated by means of a second drum 66 which draws the liner around a second splitter tongue 68 in an operation similar to that employed with respect to the release liner 18 or 46. The second drum 66 is driven by means of a gear 70 which is in turn driven by operation of the lever 58.

The intermediate indicator assembly 10 or 30 according to the present invention provides a means for maintaining the fluid-saturated pad 28 or 38 separate from the wick 26 or 42 during shipment and storage without the expense associated with barrier layers or frames thought necessary and provided with prior elapsed time or critical temperature indicators. Thus an indicator is provided to the customer at a reduced cost and beneficial use of such devices may be increased.

The present invention has been described with respect to two embodiments, but it is recognized that many modifications will be apparent to those skilled in the art. All such modifications which fall within the spirit and scope of the appended claims are intended to be included in the invention.

## Claims

1. An intermediate time interval and critical temperature indicator assembly (10, 30) adapted to define, when folded along a fold line (20, 34), a time interval or critical temperature indicator (12, 48) including, in ordered superposed layers, an attachment layer (14, 32), a supply of fluid (28, 38), a fluid sorbent wick (26, 42) and a transparent cover (22, 44) to permit visual observation of sorption of the fluid by the wick (26, 42), the intermediate indicator assembly (10, 30) comprising:

a thin, planar and non-sorbent attachment layer (14, 32) extending at least predominantly to one side of said fold line (20, 34);

a supply of fluid (28, 38) disposed on and attached to one major surface of said attachment layer (14, 32), said supply (28, 38) being further disposed completely on one side of said fold line (20, 34);

a thin, planar and sorbent wick (26, 42) connected to said attachment layer (14, 32) and disposed at least predominantly on the other side of said fold line (20, 34) and completely free of contact with said supply of fluid (28, 38);

a thin, planar, transparent and non-sorbent cover (22, 44) connected to said attachment layer (14, 32) and disposed at least predominantly on the other side of said fold line (20, 34) and completely free of contact with said supply of fluid (28, 38), said cover (22, 44) being disposed relative to said wick (26, 42) so that when said intermediate indicator assembly (10, 30) is folded at said fold line (20, 34), said wick (26, 42) will be interposed between said cover (22, 44) and said supply of fluid (28, 38); and

means (16, 36) for attaching said cover (22, 44) to said one major surface of said attachment layer (14, 32) when said intermediate indicator assembly (10, 30) is folded at said fold line (20, 34) so that said wick (26, 42) will be brought into and maintained in pressure contact with said supply of fluid (28, 38) by said cover (22, 42).

2. An intermediate indicator assembly (30) according to claim 1 wherein said wick (42) is directly attached to said one major surface of said attachment layer (32) and disposed completely on the other side of said fold line (34) and wherein said cover (44) is attached directly to the other major surface of said attachment layer (32) and disposed completely on the other side of said fold line (34).

3. An intermediate indicator assembly (30) according to claim 2 wherein said cover (44) extends a greater distance from said fold line (34) than said wick (42) so that said cover (44) will contact said attachment layer (32) when said intermediate indicator assembly (30) is folded at said fold line (34).

4. An intermediate indicator assembly (30) according to claim 2 further including a sorbent pad (38) disposed on and attached to said one major surface of said attachment layer (32) for containing said fluid.

5. An intermediate indicator assembly (30) according to claim 4 further including a non-sorbent film (40) interposed between said pad (38) and said attachment layer (32) to prevent migration or contamination of said fluid.

6. An intermediate indicator assembly (30) according to claim 2 further including a pressure-sensitive adhesive (36) coating both major surfaces of said attachment layer (32) to afford attachment of said attachment layer (32) to a surface and attachment of said wick (42), said cover (44) and said supply of fluid (38) to said attachment layer (32).

0193393

7. An intermediate indicator assembly (10, 30) according to claim 1 further including a sorbent pad (28, 38) disposed on and attached to said one major surface of said attachment layer (14, 32) for containing said fluid.

8. An intermediate temperature indicator assembly (10, 30) according to claim 7 further including a non-sorbent film (40) interposed between said pad (28, 38) and said attachment layer (14, 32) to prevent migration or contamination of said fluid.

9. An intermediate indicator assembly (10, 30) according to claim 1 wherein said cover (22, 44) extends a greater distance from said fold line (20, 34) than said wick (26, 42) so that said cover (22, 44) will make contact with said attachment layer (14, 32) when said intermediate indicator assembly (10, 30) is folded at said fold line (20, 34).

10. An intermediate indicator assembly (10, 30) according to claim 1 further including a pressure-sensitive adhesive (16, 36) coating both major surfaces of said attachment layer (14, 32) to afford attachment of said attachment layer (14, 32) to a surface and attachment of said wick (26, 42), said cover (22, 44) and said supply of fluid (28, 38) to said attachment layer (14, 32).

0193393

1/3

*FIG.1*

*FIG.2*

*FIG.3*

FIG. 4

FIG. 5

0193393

FIG. 6